# EUROPÄISCHE PATENTSCHRIFT

(11) **EP 2 460 638 B1**
(45) Veröffentlichungstag und Bekanntmachung des Hinweises auf die Patenterteilung: **11.03.2020**
(21) Anmeldenummer: 11189551.2
(22) Anmeldetag: 17.11.2011
(51) Int. Cl.: B29C 49/12, B29C 49/78, B29C 49/06

(54) **Verfahren zum Streckblasen und Streckblasmaschine**
Method for stretch blowing and stretch blowing machine
Procédé d'étirage-gonflage et machine d'étirage-gonflage

(30) Priorität: 03.12.2010 DE 102010062424
(43) Veröffentlichungstag der Anmeldung: 06.06.2012
(73) Patentinhaber: Krones AG, 93073 Neutraubling (DE)
(72) Erfinder: Finger, Dieter, 93073 Neutraubling (DE)
(74) Vertreter: Grünecker Patent- und Rechtsanwälte PartG mbB

(56) Entgegenhaltungen:
- WO-A1-99/48669
- WO-A2-2008/098565
- DE-A1- 2 717 365

## Beschreibung

Die Erfindung betrifft ein Verfahren gemäß Oberbegriff des Patentanspruchs 1 sowie eine Streckblasmaschine gemäß Oberbegriff des Patentanspruchs 12.

Bei einer aus WO99/48669 A1 bekannten Streckblasmaschine wird jeder Reckvorgang durch einen elektrischen Servomotor, z. B. einen Linearmotor, über die elektronische programmierbare Steuereinheit gesteuert. Dabei wird ein Verfahren durchgeführt, bei welchem die vom Servomotor auf die Reckstange übertragene Kraft variierbar ist z. B. um Beschädigungen des Formhohlraumbodens oder Preformbodens zu vermeiden, und zwar in einer Regelschleife, wobei sich die Kraft über den Motorstrom und eine Geberposition automatisch ergibt. Über die Steuereinheit werden vorbestimmte Kraftkurven gesteuert. Die vom Servomotor auf die Reckstange übertragene Kraft wird zwar variiert, jedoch bis zum Abschluss des Reckvorgangs stetig gesteigert, so dass die Kraft bei Abschluss des Reckvorgangs einen Maximalwert erreicht.

Bei einer aus WO 2008/098565 A bekannten Streckblasmaschine ist ein starres Recksystem an der Reckstange, einem elektrischen Servomotor, z. B. einem Linearmotor, und einer mechanischen Kopplung vorgesehen. Die Steuereinheit enthält einen Regler zum kraftgesteuerten Recken des Preforms. Die vom Servomotor auf die Reckstange übertragene Kraft wird durch Erfassung des Motorstroms gemessen und über den Reckweg variiert. Die Position der Reckstange wird jeweils über Geber am Motor ermittelt. Über die Steuereinheit werden vorbestimmte Kraft/Weg- oder Kraft/Zeit-Profile abgearbeitet.

Aus DE 27 17 365 A1 ist ein mechanisches Reckblasverfahren bekannt, bei dem der Hauptteil und der Bodenteil sowie der Übergangsbereich vom Hauptteil zum Bodenteil des Behälters einen gleichen, axiale und radiale Komponenten umfassenden Reckungsgrad und damit gleiche Festigkeiten aufweisen. Durch welchen Antrieb die Reckstange verfahren wird, ist nicht offenbart. Jedoch wird die für die mechanische Reckung aufgewendete Kraft kurz vor dem oder während des Aufblasens des Bodenteils des Behälters verringert oder sogar weggenommen, damit das Bodenteilzentrum an der Reckung teilnehmen kann.

Nach Abschluss des Reckvorganges, d. h., sobald der Preform in seiner Länge komplett gereckt ist, kann das untere Ende der Reckstange in den Preformboden drücken, um ein Wegdriften des Preformbodens zur Seite zu verhindern (Offcenter-Schutz), was sonst in ungleichmäßiger Materialdicke über den Umfang des Behälters resultieren könnte. Dieses sogenannte Überdrücken ist bei pneumatischen Reckstangen-Antriebssystemen problemlos steuerbar, da der Pneumatikzylinder auf Anschlag geht und ein pneumatisches Antriebssystem nicht starr ist. Hingegen sind Reckstangen-Antriebssysteme mit einem elektrischen Servomotor starre Systeme, wobei bei jedem Reckvorgang die Gefahr auftritt, dass der Servomotor versucht, eine Sollposition mit maximaler Kraft anzufahren, diese aber nicht erreichen kann, und deshalb thermisch überlastet wird. Die von der Reckstange ausgeübte Kraft wird kurz vor dem Aufblasen oder während des Aufblasens des Preformbodens verringert oder weggenommen.

Der Erfindung liegt die Aufgabe zugrunde, ein Verfahren der eingangs genannten Art sowie eine zum Durchführen des Verfahrens geeignete Streckblasmaschine anzugeben, mit denen die Gefahr einer thermischen Überlastung des elektrischen Servomotors minimiert oder ausgeschlossen wird. Teil der Aufgabe ist es ferner, beispielsweise bei kritischen Behälterformen, trotz Minimierens oder Ausschließens einer thermischen Überlastung des elektrischen Servomotors einen Offcenter-Schutz zu erzielen.

Die gestellte Aufgabe wird verfahrensgemäß mit den Merkmalen des Patentanspruchs 1 und mit einer Streckblasmaschine mit den Merkmalen des Patentanspruchs 12 gelöst.

Verfahrensgemäß wird trotz des starren Antriebssystems mit dem elektrischen Servomotor bei der Kraftsteuerung die vom Servomotor auf die Reckstange übertragene Kraft im Bereich des Endes des Reckvorgangs gezielt reduziert, so dass entweder gar kein Überdrücken oder nur ein gerade den Offcenter-Schutz sicherstellendes Überdrücken des Preformbodens erfolgt. Jedoch wird die Gefahr einer thermischen Überlastung des Servomotors minimiert oder ausgeschlossen, da der Servomotor nicht mit Maximalkraft versucht, eine Sollposition anzufahren, die er nicht erreichen kann, sondern mit der reduzierten Restkraft und über eine begrenzte Zeitdauer. Dabei wird die Kraft bis auf eine im Hinblick auf einen thermischen Überlastschutz zumindest des Servomotors gesteuerte Restkraft reduziert. Dabei wird die Kraft erst eine vorbestimmte Wartezeit nach dem Kontakt des Preformbodens mit dem Formhohlraumboden reduziert, und anschließend über die vorbestimmte Zeitdauer reduziert gehalten. Die Wartezeit wird so eingestellt, dass eine thermische Überlastung des Servomotors beziehungsweise dessen Servoumrichters nicht auftritt. Dabei kann es zweckmäßig sein, wenn die Kraft nur bis auf eine im Hinblick auf einen Offcenter-Schutz des Preformbodens gesteuerte Restkraft reduziert wird, und/oder die Zeitdauer bzw. Wartezeit entsprechend eingestellt wird bzw. werden. So wird beispielsweise bei einer höheren Restkraft die Zeitdauer kürzer eingestellt, und umgekehrt bei einer niedrigeren Restkraft die Zeitdauer länger eingestellt.

In der Streckblasmaschine ist über die entsprechend konzipierte Eingabe- und Anzeigesektion der Ablauf jedes Reckvorgangs entweder mit festen Werten oder variabel so festgelegt, dass bei einer Kraftsteuerung der Reckstangenverstellung die vom Servomotor auf die Reckstange übertragene Kraft im Bereich des Endes des Reckvorgangs nach einer vorbestimmten Wartezeit nach dem Kontakt des Preformbodens mit dem Formhohlraumboden auf vorbestimmte Weise reduziert wird, nach einer oder über einer vorbestimmten Zeit, um die thermische Belastung des Servomotors und dessen Servoumrichters auf ein zulässiges Maß zu begrenzen, das die Gefahr einer thermischen Überlastung zumindest minimiert oder vollständig ausschließt.

Die übertragene Kraft wird gegenüber einer Maximalkraft gesteuert reduziert. Die Maximalkraft kann die maximale Nennkraft des Servomotors sein, oder eine unterhalb der maximalen Nennkraft liegende Kraft, die jedoch im Regelfall größer ist als die nach der Kraftreduktion an der Reckstange wirkende Restkraft.

Bei einer zweckmäßigen, einfach zu programmierenden Verfahrensvariante wird die Kraft um einen festen Wert reduziert, beispielsweise auf einen festen Prozentanteil der Maximalkraft.

Bei einer anderen Verfahrensvariante wird die Kraft um einen variablen Wert reduziert, der an die jeweiligen Prozessbedingungen und/oder Materialparameter und/oder Behälterform und dergleichen angepasst ist.

Ferner ist es zweckmäßig, die Zeitdauer und/oder die Wartezeit entweder fest einzustellen oder individuell zu variieren.

Bei einer anderen Verfahrensvariante werden bei der Kraftsteuerung anstelle der Zeitdauer und/oder der Wartezeit korrespondierende Drehwinkelbereiche eines die Blasform aufweisenden, drehantreibbaren Blasrads verwendet, wobei der Drehwinkel des Blasrades über entsprechende Geber abgegriffen und an die Steuereinheit übermittelt wird.

Die Kraftreduktion kann ferner unter Berücksichtigung der aktuellen Servomotorbelastung automatisch errechnet und gesteuert werden, z. B. über eine Routine der Steuereinheit oder wenigstens eines Servoumrichters, z. B. indem ein Trend zu einer thermischen Grenzbelastung verfolgt, und vor Erreichen der Grenzbelastung mit der Kraftreduktion entgegengewirkt wird. Die Kraftreduktion kann auch hier um einen festen Wert erfolgen, oder z. B. abhängig von der Entwicklung des Trends (schleichend oder progressiv) variabel gesteuert werden. Gleiches gilt für eine dann eingestellte Wartezeit und/oder Zeitdauer.

Ferner ist es zweckmäßig sein, wenn der Reckvorgang zumindest überwiegend kraftgesteuert wird, d. h. zumindest in der Endphase.

Alternativ kann der Reckvorgang in einer Anfangsphase weggesteuert werden, um eine kurze Zykluszeit zu erzielen, und erst in der Endphase oder am Ende des Reckvorgangs kraftgesteuert werden, wobei, vorzugsweise, nach Umschalten von der Wegsteuerung auf die Kraftsteuerung zunächst eine feste oder variable Wartezeit berücksichtigt werden kann, bis die Kraft reduziert wird.

Grundsätzlich ist es von Vorteil, wenn der Reckvorgang mit in verschiedenen Reckphasen unterschiedlichen Geschwindigkeiten gesteuert wird, weil dies für höhere Flexibilität bei der Steuerung des Reckvorgangs und hohe Qualität der Behälter sorgt.

Ausführungsformen des Erfindungsgegenstandes werden anhand der Zeichnung erläutert.

Es zeigen
- Fig. 1: eine Schemadraufsicht einer Streckblasmaschine (Rundläufer),
- Fig. 2: eine Vorderansicht einer Blasstation,
- Fig. 3: eine Seitenansicht der Blasstation von Fig. 2,
- Fig. 4: einen Querschnitt der Blasstation,
- Fig. 5: ein Flussdiagramm zur Darstellung der Steuerung eines Reckvorgangs,
- Fig. 6: ein Flussdiagramm zu einem anderen Reckvorgang, und
- Fig. 7: einen Teil eines Flussdiagramms zu einem noch anderen Reckvorgang.

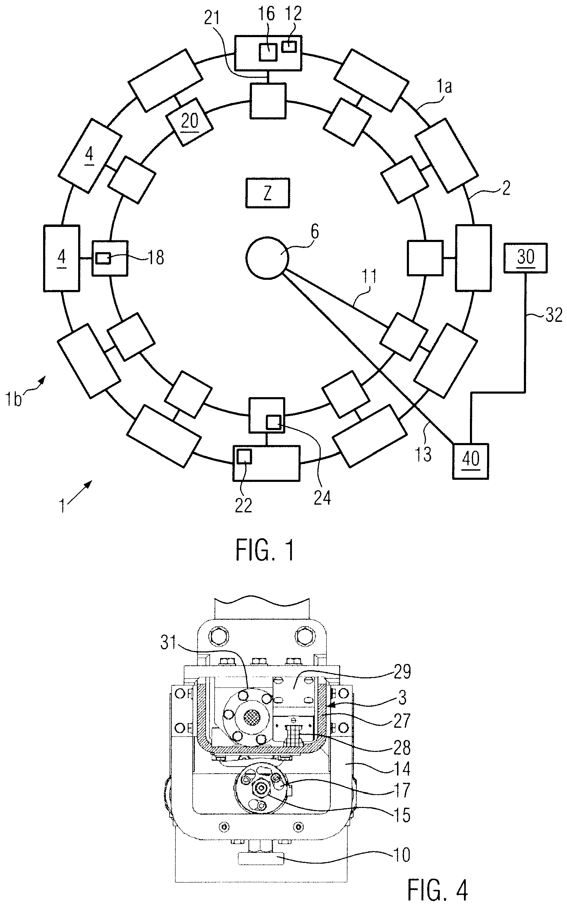

Fig. 1 zeigt eine Streckblasmaschine 1 zum Streckblasen von Behältern, insbesondere Flaschen aus Preforms. Die Streckblasmaschine 1 ist hier ein Rundläufer mit einem umseitig Blasstationen 4 tragenden Blasrad 2, das einen sich in Relation zu einem stehenden Teil 1b drehenden Teil 1a repräsentiert. Das erfindungsgemäße Konzept ist jedoch ohne Einschränkung auch für Streckblasmaschinen verwendbar, bei denen die Blasstationen oder eine Blasstation stationär angeordnet sind bzw. ist (nicht gezeigt).

In Fig. 1 ist zumindest für eine Blasstation 4 auf dem Blasrad 2 eine elektronische, programmierbare Steuereinheit 20 angeordnet. Die Energieversorgung jeder Steuereinheit 20 erfolgt z. B. über Verbindungsleitungen 11 und eine Drehdurchführung 6, z. B. eine Schleifringanordnung und/oder Mediendurchführung, im Zentrum des Blasrades 2. Jede Blasstation 4 weist ein Reckstangen-Antriebssystem A mit einem elektrischen Servomotor 16 und einem Servoumrichter (nicht gezeigt) sowie eine Ventilsektion 12 gegebenenfalls mit mehreren Ventilen zum Steuern der Blasluftzufuhr beim Streckblasprozess auf. Ferner kann wenigstens ein Sensor 22 als Geber in Kommunikationsverbindung mit der jeweiligen Steuereinheit 20 stehen. Gegebenenfalls ist ein elektronischer Zeitgeber 24 vorgesehen, der beispielsweise in Abhängigkeit von einem Startsignal einen Arbeitstakt initiieren kann, oder für bestimmte Prozessphasen eingestellte Zeiten abarbeiten lässt. Ferner kann wenigstens ein Sensor 30 als Positionsgeber zum Erfassen einer Winkelposition bei der Drehung des Blasrades 2 vorgesehen sein. Diese elektronischen Komponenten sind beispielsweise mit der jeweiligen Steuereinheit 20 verbunden, oder mit einer, vorzugsweise programmierbaren, elektronischen und zentralen, Steuereinheit 40 im stehenden Teil 1b, die über eine angedeutete Verbindung 32 beispielsweise mit dem Sensor 30 kommuniziert. Eine Kommunikationsverbindung 13 kann zur Übertragung eines Startsignals an die jeweilige Steuereinheit 20 vorgesehen werden. In zumindest einer Steuereinheit 20 (dann zentral für alle Steuereinheiten) oder in jeder Steuereinheit 20 kann eine Speicher- und/oder Eingabe- und/oder Anzeigesektion 18 vorgesehen sein, um Daten abzulegen, auszulesen, zu kommunizieren, und dergleichen. Jede Steuereinheit 20 kommuniziert über eine Verbindung 21 mit der Blasstation 4 oder dem Reckstangen-Antriebssystem A bzw. dem Servomotor 16 für das elektrische Recken. Die Eingabe- und/oder Anzeigesektion 18 könnte alternativ oder additiv der zentralen Steuereinheit 40 zugeordnet sein.

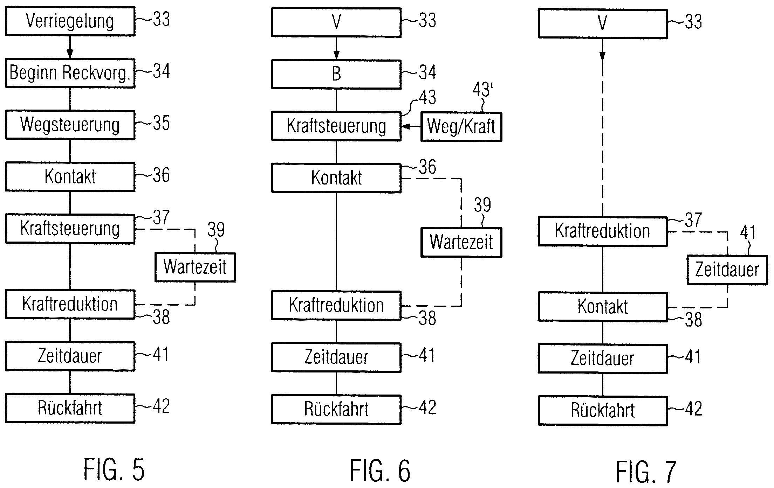

Die jeweilige Eingabe- und/oder Anzeigesektion 18 kann z. B. an der Steuereinheit 40 im stehenden Teil 1b, wenigstens einen Abschnitt 18a, 18b, z. B. eine Tastatur oder eine Touchscreen, zum Eingeben oder Einstellen einer z. B. prozentualen Reckkraftreduktion zu einer bestimmten Zeit eines Reckvorgangs oder ab einer bestimmten Position einer Reckstange 15, und einer der Reckkraftreduktion zugeordneten Zeitdauer und/oder Wartezeit aufweisen, wie dies später anhand der Fig. 5 bis 7 erläutert wird.

Die Reckkraftreduktion (z. B. deren Ausmaß oder die Restkraft) und/oder die Zeitdauer bzw. Wartezeit können alternativ und/oder additiv von der Steuereinheit 20 oder 40 bzw. einem dort vorgesehenen Servoumrichter automatisch ermittelt und berücksichtigt werden. Speziell der Servoumrichter bildet häufig intern Servomotor-Modelle nach, die mit Betriebsparametern des Servomotors 16 wie Motorstrom, Temperatur, etc. gespeist werden, sodass die aktuelle prozentuale Motorbelastung errechnet werden kann. Wird bei der Berechnung ein Überschreiten einer gesetzten thermischen Grenzbelastung detektiert, schaltet der Servoumrichter sicherheitshalber ab. Diese Routine des Servoumrichters oder der Steuereinheit 20, 40 kann günstig benutzt werden, einen Trend zum Erreichen der thermischen Grenzbelastung mitzuverfolgen und rechtzeitig vor Erreichen der thermischen Grenzbelastung die Reckkraft entsprechend zu reduzieren, und ggf. dabei die einem thermischen Überlastschutz entsprechende Zeitdauer und/oder Wartezeit einzustellen.

Der elektrische Servomotor 16 könnte (nicht gezeigt) mit einem Kraftspeicher oder Pneumatikzylinder kombiniert sein, der bei jedem Reckvorgang assistiert oder eingreift, und der, gegebenenfalls, ebenfalls von der Steuereinheit 20 gesteuert wird.

Die Steuereinheit 20 kann universell in verschiedenen Reckblasmaschinen verwendet werden und ist gegebenenfalls mit Hardware und Software-Technik ausgestattet, um wahlweise die jeweilige Blasstation 4 unabhängig von der Art des Reckstangen-Antriebssystem A zu steuern. Ferner kann die Steuereinheit 20 auch die Druckbeaufschlagung beim Streckblasprozess und/oder die erforderlichen Verstellungen einer Blasdüse und anderer, mit dem Blasdruck umgehender Komponenten steuern. Auch kann am Blasrad 2 eine Zentralschmiervorrichtung Z vorgesehen sein, die mechanische Komponenten am Blasrad 2, z. B. dosierend, mit Schmierstoff versorgt.

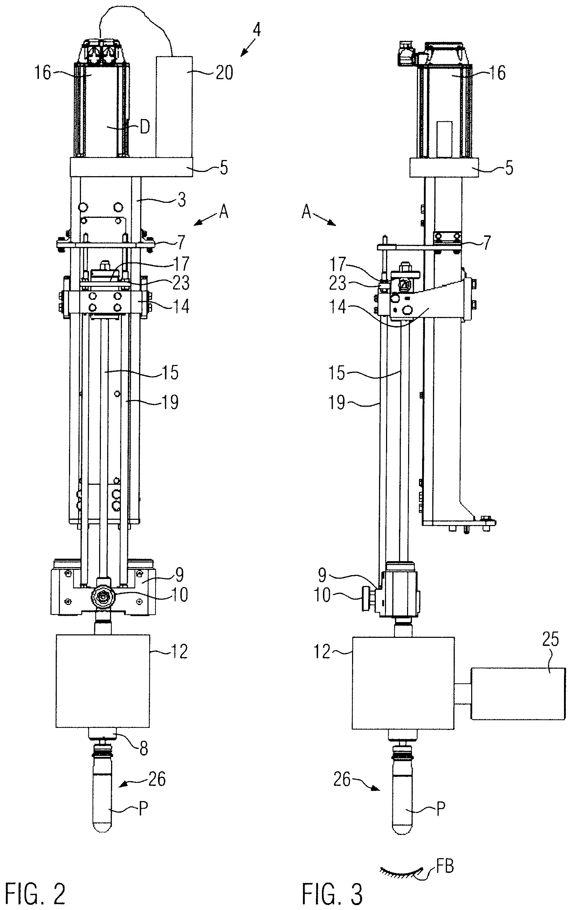

Die Fig. 2 bis 4 sind einander zugeordnete Ansichten einer Ausführungsform einer Blasstation 4 mit einem Reckstangen-Antriebssystem A, wobei allerdings nur Hauptkomponenten dargestellt sind.

Ein am Blasrad 2 oberhalb einer geteilten Blasform 26 (nicht im Detail gezeigt) montierter Lagerbock 3 trägt den hier als Drehmotor ausgebildeten, elektrischen Servomotor 16 und die Steuereinheit 20. Der Servomotor 16 und die Steuereinheit 20 können über einen Kühlkörper 5 auf dem Kopfende des Lagerbocks 3 installiert sein, der (Fig. 4) über einen erheblichen Teil seiner Länge als U-Profil ausgebildet ist. Am Lagerbock 3 kann ein Anschlag 7 für einen mit einer Reckstange 15 gekoppelten Reckschlitten 14 vorgesehen sein. Der Anschlag 7 ist, vorzugsweise, einstellbar und/oder abgefedert. Die Reckstange 15 ist über eine lösbare Kupplung 17 im Reckschlitten 14 festgelegt und erstreckt sich parallel zum Lagerbock 3 nach unten bis zur Blasform 26, an deren Position ein Preform P gezeigt ist, aus dem durch Überlagerung eines Reckvorgangs und eines Blasprozesses ein Behälter mit der Form des Formhohlraums der Blasform 26 geformt wird. Die Reckstange 15 durchsetzt einen verschiebbar geführten Blasschlitten 9, mit dem eine Blasdüse 8 verbunden ist, die relativ zur Blasform 26 anhebbar und bis zur Abdichtung beispielsweise auf der Mündung eines eingesetzten Preforms P absenkbar ist.

Die Blasform 26 besitzt (nicht gezeigt) beispielsweise zwei Formhälften und eine einen Formhohlraumboden FB (Fig. 4) definierende Bodenform, wobei zumindest die Formhälften in Trägern angeordnet sind, die über einen nicht gezeigten Mechanismus bewegt werden können, um die Blasform 26 zu öffnen und zu schließen und im geschlossenen Zustand und nach Einbringen des Preforms P zu verriegeln.

Zum Beispiel nach Abschluss der Verriegelungsphase wird die Blasdüse 8 auf die Preformmündung B aufgesetzt, ehe über die Ventilsektion 12 die Druckbeaufschlagung vorgenommen wird, beispielsweise um eine Vorblasphase mit geringerem Druckniveau und anschließend eine Fertigblasphase mit hohem Druckniveau auszuführen, überlagert mit dem Reckvorgang durch die Reckstange 15, die in die Blasform 26 eingeschoben wird, bis am Ende des Reckvorgangs der Preformboden B mit dem Formhohlraumboden FB zumindest in Kontakt gebracht oder sogar noch überdrückt wird. Das Überdrücken bietet einen Offcenter-Schutz gegen seitliches Abdriften des Preformbodens B beim Blasformprozess.

Vom Reckschlitten 16 erstreckt mindestens eine Mitnehmerstange 19 zum Blasschlitten 9. Die Mitnehmerstange 19 ist in einer Mitnehmerkupplung 23 mit dem Reckschlitten 14 in dessen Rückhubrichtung der Reckstange 15 kuppelbar, beispielsweise um den Blasschlitten 9 anzuheben bzw. den Reckschlitten 14 in Relation zu dem dann mechanisch blockierten Blasschlitten anzuhalten.

Der Servomotor 16 ist mit dem Reckschlitten 14 über eine Gewindespindel 31 verbunden, die im Inneren des U-Profils 27 angeordnet ist und dort auch abgestützt sein kann. Der Reckschlitten 14 greift um das U-Profil 27 und erstreckt sich mit einer Kopplung 29 ins Innere des U-Profils 27 und auch in eine dort angeordnete Linearführung 28. Die Reckstange 15 kann über die lösbare Kupplung 17 aus dem Reckschlitten 14 getauscht werden.

Fig. 4 deutet ein Hebeglied 10 (siehe auch Fig. 2 und 3) am Blasschlitten 9 an. Dieses Hebeglied 10 ist beispielsweise eine Mitnehmerrolle, die mit einer nicht gezeigten Fangkurve zusammenarbeitet, um den Blasschlitten 9 anzuheben, beispielsweise um den fertig gestellten Behälter in der Blasform 26 zu entlüften, falls ein Auslassventil zu einem Schalldämpfer 25 an der Ventilsektion 12 nicht ordnungsgemäß funktionieren sollte.

Die Bewegung des Blasschlittens wird durch eine nicht dargestellte Kurvensteuerung gesteuert, oder alternativ durch einen Servomotor, und z. B. in zeitlicher oder wegabhängiger Zuordnung zu dem Mechanismus, der die Verriegelungsphase der Blasform 26 steuert.

Die Steuereinheit 20 (oder die Steuereinheit 40) steuert während des Reckvorgangs einen exakt vorherbestimmten Bewegungsablauf der Reckstangenverstellung, so dass das freie Ende der die Ventilsektion 12 durchsetzenden Reckstange 15 bestimmte Positionen an- und durchfährt, beispielsweise eine erste Position, in welcher das freie Ende der Reckstange 15 dem Preformboden B des noch nicht gereckten Preforms P bis auf etwa 1,0 mm angenähert ist, oder den Preformboden B schon kontaktiert, oder eine noch tiefere Position, in der Preform P etwas vorgereckt ist. Danach wird die Reckstange 15 bis in eine Endposition bei dem Formhohlraumboden FB gebracht, ohne jedoch den Formhohlraumboden FB zu berühren. Die Reckstange 15 kann weggesteuert und/oder kraftgesteuert verstellt werden, wobei sogar während eines Arbeitstakts von einer Wegsteuerung auf eine Kraftsteuerung umgeschaltet werden kann, und umgekehrt. Auch kann die Geschwindigkeit der Reckstange ohne Bewegungsumkehr während eines Reckvorgangs, z. B. mindestens zweimal, geändert werden, ehe nach oder kurz vor Abschluss des Ausformens des Behälters die Reckstange 15 wieder zurückfährt.

Alternativ kann der Servomotor 16 ein Linearmotor sein, vorzugsweise ein Linearmotor in tubularer Bauweise oder flacher Bauform, und mit seinem Läufer einen Direktantrieb der Reckstange 15 bilden (nicht gezeigt). Ferner könnte dem elektrischen Servomotor 16 ein Kraftspeicher zugeordnet sein, z. B. eine Feder oder ein Pneumatikzylinder, der den Servomotor 16 assistiert und/oder vorbestimmte Kraftverläufe erzeugt oder Kräfte aufnimmt oder kompensiert, die beispielsweise vom Druck hergestellten Behälter bei noch nicht entlüfteter Blasform 26 die Reckstange 15 in Rückfahrrichtung beaufschlagen.

Der Servomotor 16 könnte als Drehmotor D die Drehbewegung über eine Seilkette oder einen Zahnriemen, z. B. in einer endlosen Schlaufe, auf den Reckschlitten 17 und die Reckstange 15 übertragen (nicht gezeigt).

Der Reckvorgang wird beim elektrischen Recken des Preforms P mittels des Servomotors 16 so gesteuert, dass die Reckstange 15 z. B. spätestens mit Beginn der Verriegelungsphase oder während der Verriegelungsphase der Blasform 26 eingeführt wird, gegebenenfalls sogar schon vor Beginn der Verriegelungsphase, beispielsweise wenn sich ein nicht gezeigter Übergabe an mit dem Preform P noch geöffneter Blasform 26 auf dem gleichen Weg bewegt wie die Blasform 26. Die Reckstange 15 wird zunächst bis etwa 1,0 mm zum Preformboden B hin oder sogar in Kontakt mit diesem verstellt, ehe die Blasdüse 8 auf die Preformmündung 8 abdichtend aufgesetzt ist und die Vorblasphase eingeleitet wird. Die Reckstange 15 kann bis dahin sogar noch weiter eingeführt werden, und bereits mit dem Vorrecken des Preforms P begonnen haben, wenn die Blasdüse 8 aufsetzt. Danach wird die Reckstange 15 noch in der Vorblasphase, in der die Behälterform bis zu einem überwiegenden Prozentanteil fertig geblasen wird, bis nahe zum Formhohlraumboden FB weiter verstellt, bis der Preformboden B zumindest Kontakt mit dem Formhohlraumboden FB hat, wobei in der anschließenden oder überlagerten Fertigblasphase mit noch höherem Blasdruck die Reckstange 15 weiterhin Kraft ausübt und sogar noch ein Nachdrücken oder Überdrücken des Preformbodens B durchführt. Die Reckstangenverstellung wird von der Steuereinheit 20 entweder weggesteuert oder kraftgesteuert, und gegebenenfalls korreliert mit der Blasdrucksteuerung, wobei, wie erwähnt, während eines Reckvorgangs zwischen einer Wegsteuerung und einer Kraftsteuerung umgeschaltet werden kann und in unterschiedlichen Reckphasen unterschiedliche Geschwindigkeiten gesteuert werden können.

Die Positionen der Reckstange 15 während des Reckvorgangs werden von der Steuereinheit 20 vorgegeben, wie auch die Geschwindigkeit, die zweckmäßig zweimal geändert werden kann. Entsprechende Vorgaben werden entweder durch einen vorhergehenden Kalibriervorgang zum Beschaffen von Parameterwerten für die Steuereinheit 20 und/oder durch Eingeben solcher Parameterwerte, abhängig von der jeweiligen Preform- und/oder Behältersorte, festgelegt. Die jeweilige Position der Reckstange 15 oder die übertragene Kraft sind zumindest die bestimmten Reckphasen in der Steuereinheit 20 über entsprechende Signale und/oder Stromwerte des Servomotors 16 ermittelbar, da das Reckstangen-Antriebssystem A starr ist.

Dem Servomotor 16 ist zumindest ein Frequenzumrichter oder Servoumrichter zugeordnet, von dem der Servomotor 16 die Versorgungsspannung erhält (z. B. etwa 600 bis 900 V).

Erfindungsgemäß wird bei jedem Reckvorgang die vom Servomotor 16 auf die Reckstange 15 übertragene Kraft gegenüber einer Maximalkraft (der maximalen Nennkraft oder einer vorbestimmten Maximalkraft des Servomotors 16) in Zuordnung zur Endphase des Reckvorgangs reduziert, wobei zweckmäßig auch eine Zeitdauer bzw. eine Wartezeit berücksichtigt wird, und zwar vordringlich als thermischer Überlastschutz für den Servomotor 16 und dessen Servoumrichter. Die Kraftreduktion wird nach Bedarf so gesteuert, dass entweder ein Überdrücken oder Nachdrücken des Preformbodens B als Offcenter-Schutz erfolgt oder unterbleibt. Dies wird anhand der Fig. 5 bis 7 erläutert.

Fig. 5 verdeutlicht als Flussdiagramm den Ablauf eines Reckvorgangs, bei welchem anfänglich eine Wegsteuerung erfolgt und dann auf eine Kraftsteuerung umgeschaltet wird. Bei 33 ist die Verriegelungsphase der Blasform 26 abgeschlossen. Bei 34 beginnt der Reckvorgang, wie gesagt mit einer Wegsteuerung 35, bis bei 36 der Preformboden B mit dem Formhohlraumboden FB in Kontakt kommt. In dieser Phase des Reckvorganges wird auf eine Kraftsteuerung bei 37 umgeschaltet, und wird nachfolgend bei 38 eine Kraftreduktion eingesteuert, d. h., die vom Servomotor 16 auf die Reckstange 15 übertragene Kraft wird gegenüber der Maximalkraft auf eine geringere Restkraft vermindert. Als gestrichelte Alternative in Fig. 5 kann zwischen dem Umschalten auf die Kraftsteuerung bei 37 und der Einsteuerung der Kraftreduktion bei 38 eine vorbestimmte Wartezeit bei 39 eingestellt sein, die so bemessen ist, dass in dieser Zeit keine thermische Überlastung des Servomotors 16 eintreten kann. Nach dem Einsteuern der Kraftreduktion bei 38 wird die Kraftreduktion bzw. die Restkraft über eine vorbestimmte Zeitdauer 41 aufrecht gehalten, beispielsweise bis kurz vor Abschluss der Ausformung des Behälters, ehe bei 42 die Reckstange 15 wieder zurückzufahren beginnt.

In der in Fig. 6 gezeigten Verfahrensvariante wird die Reckstange 15 ab Beginn des Reckvorgangs bei 34 mit Kraftsteuerung bei 43 verstellt, bis bei 36 Kontakt zwischen dem Preformboden B und dem Formhohlraumboden FB entsteht. Mit Feststellen des Kontakts (durch Kraftmessung und/oder Positionsvorgabe) wird bei 38 die Kraftreduktion eingesteuert, die dann über die vorbestimmte Zeitdauer bei 41 aufrecht gehalten wird, ehe die Reckstange bei 42 die Rückbewegung beginnt.

Als Alternative in Fig. 6 kann die Kraftsteuerung nicht bereits ab Beginn 34 des Reckvorgangs aktiv sein, sondern es kann erst danach bis zum Kontakt bei 36 von der Wegsteuerung auf die Kraftsteuerung umgeschaltet werden, wie bei 43' angedeutet. Als weitere Alternative kann zwischen dem Kontakt bei 36 und der Kraftreduktion bei 38 eine Wartezeit bei 39 eingestellt werden.

In der Verfahrensvariante in Fig. 7 wird im Ablauf des Reckvorgangs (mit Kraftsteuerung) die Kraftreduktion bei 38 schon eingesteuert, ehe bei 36 der Kontakt stattfindet, (idealerweise ganz kurz vor dem Kontakt). Ab dem Kontakt 36 wird die Kraftreduktion 38 über die vorbestimmte Zeitdauer 41 aufrecht gehalten, ehe schließlich bei 42 die Reckstange 15 die Rückbewegung aufnimmt. Als gestrichelte Alternative in Fig. 7 kann zwischen der Kraftreduktion bei 38 und dem Kontakt bei 36 eine vorbestimmte Zeitdauer bei 41 eingestellt werden, über welche die reduzierte Restkraft wirksam ist.

Die Verfahrensvarianten der Fig. 5, 6, 7 sind nicht als beschränkend aufzufassen, sondern können miteinander kombiniert werden. Die Kraftreduktion kann mit einem festen Kraftwert eingesteuert werden, oder es wird der Kraftwert der Kraftreduktion individuell variiert. Ähnlich kann die Wartezeit und/oder die Zeitdauer einer ersten Zeit entsprechen, oder nach Bedarf variiert werden. Danach kann alternativ die Wartezeit und/oder die Zeitdauer als ein Drehwinkelbereich einer vollen Umdrehung des Blasrades berücksichtigt werden, so dass die Signale beispielsweise des Zeitgebers 24 in Fig. 1 und/oder des Sensors 30 verarbeitet werden können. Die Restkraft kann natürlich auch nach der Kraftreduktion nach Bedarf variiert werden.

## Patentansprüche

1. Verfahren zum Streckblasen von Behältern aus Preforms (P) in einer Blasstation (4) einer Streckblasmaschine (1), wobei in der Blasstation (4) mindestens eine einen Formhohlraum definierende Blasform (26), eine Blasdüse (8) und eine über einen elektrischen Servomotor (16) bei einem Reckvorgang verstellbare Reckstange (15) vorgesehen sind, und eine elektronische Steuereinheit (20) zumindest die Geschwindigkeit und/oder die Kraft und/oder den Weg der Reckstangenverstellung über den Servomotor (16) bei jedem Reckvorgang steuert, und bei dem Verfahren die Reckstange (15) während des Reckvorgangs bei Blasdruckbeaufschlagung des Preforms (P) aus der Blasdüse (8) unter Mitnahme eines Preformbodens (B) maximal bis zu dessen Kontakt mit einem Formhohlraumboden (FB) verstellt wird, **dadurch gekennzeichnet, dass** in einer Endphase oder am Ende des Reckvorgangs die vom Servomotor (16) auf die Reckstange (15) übertragene Kraft gegenüber einer Maximalkraft bis auf eine gesteuerte Restkraft reduziert wird, und dass die Kraft erst eine vorbestimmte Wartezeit nach dem Kontakt des Preformbodens (B) mit dem Formholraumboden (FB) reduziert und die reduzierte Restkraft anschließend über eine vorbestimmte Zeitdauer gehalten wird.

2. Verfahren nach Anspruch 1, **dadurch gekennzeichnet, dass** die Kraft in der Endphase des Reckvorgangs eine vorbestimmte Zeitdauer vor dem Kontakt auf die Restkraft reduziert und die reduzierte Restkraft über die Zeitdauer bis zum Kontakt und auch anschließend über die vorbestimmte Zeitdauer gehalten wird.

3. Verfahren nach Anspruch 1, **dadurch gekennzeichnet, dass** die Kraft am Ende des Reckvorgangs bei Kontakt des Preformbodens (B) mit dem Formhohlraumboden (FB) auf die Restkraft reduziert und die reduzierte Restkraft anschließend über die vorbestimmte Zeitdauer gehalten gesteuert wird.

4. Verfahren nach Anspruch 1, **dadurch gekennzeichnet, dass** die Kraft um einen festen Wert reduziert wird.

5. Verfahren nach Anspruch 1, **dadurch gekennzeichnet, dass** die Kraft um einen variablen Wert reduziert wird.

6. Verfahren nach wenigstens einem der Ansprüche 1 bis 5, **dadurch gekennzeichnet, dass** die Zeitdauer und/oder die Wartezeit entweder fest oder variabel gesteuert wird bzw. werden.

7. Verfahren nach wenigstens einem der vorhergehenden Ansprüche, **dadurch gekennzeichnet, dass** bei der Kraftsteuerung anstelle der Zeitdauer und/oder der Wartezeit ein korrespondierender Drehwinkelbereich einer vollen Umdrehung eines die Blasform (26) aufweisenden, drehantreibbaren Blasrads (2) verwendet wird.

8. Verfahren nach wenigstens einem der vorhergehenden Ansprüche, **dadurch gekennzeichnet, dass** die Kraft automatisch, vorzugsweise über eine Routine der Steuereinheit (20, 40) oder wenigstens eines Servoumrichters anhand vorhandener Servomotor-Betriebsparameter, reduziert wird, und dass die Kraftreduktion und/oder vorzugsweise die Wartezeit bzw. Zeitdauer ebenfalls automatisch bedarfsabhängig errechnet und eingestellt wird bzw. werden.

9. Verfahren nach wenigstens einem der vorhergehenden Ansprüche, **dadurch gekennzeichnet, dass** der Reckvorgang kraftgesteuert wird.

10. Verfahren nach wenigstens einem der vorhergehenden Ansprüche, **dadurch gekennzeichnet, dass** der Reckvorgang in einer Anfangsphase weggesteuert und erst in der Endphase oder am Ende des Reckvorgangs kraftgesteuert wird, und, vorzugsweise, nach Umschalten auf die Kraftsteuerung bis zur Kraftreduktion eine feste oder variable Wartezeit eingehalten wird.

11. Verfahren nach den Ansprüchen 9 oder 10, **dadurch gekennzeichnet, dass** der Reckvorgang mit in verschiedenen Reckvorgangsphasen unterschiedlichen Geschwindigkeiten gesteuert wird.

12. Streckblasmaschine (1) zum Streckblasen von Behältern aus Preforms (P) in wenigstens einer Blasstation (4), die mindestens eine einen Formhohlraum definierende Blasform (26), eine Blasdüse (8), und eine bei einem Reckvorgang über einen elektrischen Servomotor (16) verstellbare Reckstange (15) aufweist, wobei die Streckblasmaschine (1) zumindest eine elektronische programmierbare Steuereinheit (20, 40) zur Geschwindigkeits- und/oder Kraft- und/oder Wegsteuerung der Reckstangenverstellung über den Servomotor (16) aufweist, **dadurch gekennzeichnet, dass** in der Steuereinheit (20, 40) über eine Eingabesektion (18, 18a, 18b) durch Signale und/oder Stromwerte für den Servomotor (16) eine feste oder variable Reduktion der vom Servomotor (15) in einer Endphase oder am Ende eines Reckvorgangs auf die Reckstange (15) übertragenen Kraft gegenüber einer Maximalkraft bis auf eine gesteuerte reduzierte Restkraft und eine feste oder variable Kraftreduktions-Wartezeit für die Kraftreduktion nach einem Kontakt zwischen dem Preformboden (B) und dem Formhohlraumboden (FB) programmiert sind.

## Claims

1. A method for stretch-blowing containers of preforms (P) in a blow-molding station (4) of a stretch-blow-molding machine (1), wherein at least one blow mold (26) defining a mold cavity, a blast nozzle (8) and a stretching rod (15) which can be adjusted via an electric servomotor (16) are provided in said blow-molding station (4), and an electronic control unit (20) controls at least the speed and/or the force and/or the distance of the stretching rod adjustment via the servomotor (16) for each stretching process, and, according to the method, the stretching rod (15) is adjusted during the stretching process when the preform (P) is actuated by blowing pressure from the blast nozzle (8) while taking along preform bottom (B) maximally in contact with a mold cavity bottom (FB), **characterized in that** the force the servomotor (16) transmitted to the stretching rod (15) is reduced with regard to a maximum force to a controlled residual force either in a final phase or at the end of the stretching process, and that the force is reduced firstly a predetermined waiting time after the contact of the preform bottom (B) with the mold cavity bottom (FB), and that the reduced residual force subsequently is maintained over a predetermined time period.

2. The method according to claim 1, **characterized in that** the force in the final phase of the stretching process is reduced to the predetermined residual force a period of time prior to the contact, and that the reduced residual force is maintained over the period of time up to the contact and subsequently over a predetermined period of time.

3. The method according to claim 1, **characterized in that** at the end of the stretching process the force is reduced with the contact of the preform bottom (B) against the mold cavity bottom (FB) to the residual force, and that the reduced residual force is maintained subsequently over the predetermined period of time.

4. The method according to claim 1, **characterized in that** the force is reduced by a fixed value.

5. The method according to claim 1, **characterized in that** the force is reduced by a variable value.

6. The method according to at least one of claims 1 to 5, **characterized in that** the period of time and/or the waiting time is or are controlled either in a fixed or in a variable manner.

7. The method according to at least one of the preceding claims, **characterized in that** in case of the force control instead of the period of time and/or the waiting time a corresponding rotation angle portion of an entire revolution of a blow wheel (2) drivable in a rotatable manner and including the blow mold (26) is used.

8. The method according to at least one of the preceding claims, **characterized in that** the force is reduced automatically, preferably via a routine of the control unit (20, 40) or of at least one servo frequency converter by means of given servo motor operating parameters, and that the force reduction and/or preferably the waiting time or period of time is or are also calculated automatically depending form demand and is/are set accordingly.

9. The method according to at least one of the preceding claims, **characterized in that** the stretching process is force-controlled.

10. The method according to at least one of the preceding claims, **characterized in that** the stretching process is path-controlled during an initial phase and first will be force-controlled in the final phase or at the end of the stretching process and that, preferably, after having switched to the force control a fixed or variable waiting time is maintained until force reduction takes place.

11. The method according to claims 9 and 10, **characterized in that** the stretching process is controlled with different speeds in different stretching phases.

12. A stretch-blow-molding machine (1) for stretch-blow-molding containers from preforms (P) in at least one blow-molding station (4), comprising at least one blow mold (26) defining a mold cavity, a blast nozzle (8) and a stretching rod (15) which can be adjusted via an electric servomotor (16), the stretch-blow-molding machine (1) having at least one electronic programmable control unit (20, 40) for the speed and/or the force and/or the path control of the stretching rod adjustment via the servomotor (16), **characterized in that** the control unit (20, 40) comprises an input section (18, 18a, 18b) for programming by signals and/or current values for the servomotor (16) a fixed or variable reduction of a force the servomotor (16) transmits in a final phase or at the end of a stretching process to the stretching rod (15) with regard to a maximum force and to a controlled reduced residual force and a fixed or variable force reduction waiting time for the force reduction after contact between the preform bottom (B) and the mold cavity bottom (FB).

## Revendications

1. Procédé d'étirage-gonflage de récipients à partir de préformes (P) dans un poste de gonflage (4) d'une machine d'étirage-gonflage (1), dans lequel au moins un moule de gonflage (26) définissant une cavité de moulage, une buse de gonflage (8) et une barre d'étirage (15) réglable par un servomoteur électrique (16) pendant une opération d'étirage sont prévus dans le poste de gonflage (4), et une unité de commande électronique (20) commande au moins la vitesse et/ou la force et/ou la course du réglage de la barre d'étirage par le servomoteur (16) pendant chaque opération d'étirage, et dans lequel procédé la barre d'étirage (15) est ajustée pendant le processus d'étirage lorsque la pression de gonflage est appliquée à la préforme (P) à partir de la buse de gonflage (8), en emportant une base de préforme (B), au plus jusqu'à ce qu'elle entre en contact avec une base de cavité de moule (FB), **caractérisé en ce que en ce que**, dans une phase finale ou à la fin de l'opération d'étirage, la force transmise par le servomoteur (16) à la barre d'étirage (15) est réduite par rapport à une force maximale jusqu'à une force résiduelle contrôlée, et **en ce que** la force n'est réduite que pendant un temps d'attente prédéterminé après que le fond de la préforme (B) est entré en contact avec le fond de l'empreinte du moule (FB) et que la force résiduelle réduite est ensuite maintenue pendant une période de temps prédéterminée.

2. Procédé selon la revendication 1, **caractérisé en ce que** la force dans la phase finale du processus d'étirage est réduite à la force résiduelle un laps de temps prédéterminé avant le contact et la force résiduelle réduite est maintenue pendant le laps de temps jusqu'au contact et également ensuite pendant le laps de temps prédéterminé.

3. Procédé selon la revendication 1, **caractérisé en ce que** la force à la fin du processus d'étirage est réduite à la force résiduelle lorsque le fond de la préforme (B) est en contact avec le fond de l'empreinte du moule (FB) et la force résiduelle réduite est ensuite maintenue pendant la période de temps prédéterminée.

4. Procédé selon la revendication 1, **caractérisé par le fait que** la force est réduite d'une valeur fixe.

5. Procédé selon la revendication 1, **caractérisé par le fait que** la force est réduite d'une valeur variable.

6. Procédé selon au moins une des revendications 1 à 5, **caractérisé en ce que** la durée et/ou le temps d'attente est/sont contrôlé(s) soit fixe(s) soit variable(s).

7. Procédé selon au moins une des revendications précédentes, **caractérisé en ce que** dans la commande de force, au lieu de la durée et/ou du temps d'attente, on utilise une plage d'angle de rotation correspondante d'un tour complet d'une roue de gonflage (2) pouvant être entraînée en rotation et comportant le moule de gonflage (26).

8. Procédé selon au moins une des revendications précédentes, **caractérisé en ce que** la force est réduite automatiquement, de préférence par une routine de l'unité de commande (20, 40) ou d'au moins un servo-convertisseur sur la base de paramètres de fonctionnement existants du servomoteur, et **en ce que** la réduction de la force et/ou de préférence le temps d'attente ou la durée est ou sont également calculés et réglés automatiquement en fonction de la demande.

9. Procédé selon au moins une des revendications précédentes, **caractérisé en ce que** le processus d'étirage est commandé par la force.

10. Procédé selon au moins l'une des revendications précédentes, **caractérisé en ce que** le processus d'étirage est commandé dans une phase initiale et n'est commandé en force que dans la phase finale ou à la fin du processus d'étirage, et, de préférence après le passage à la commande en force, un temps d'attente fixe ou variable est maintenu jusqu'à ce que la force soit réduite.

11. Procédé selon les revendications 9 ou 10, **caractérisé en ce que** le processus d'étirage est contrôlé à différentes vitesses dans différentes phases du processus d'étirage.

12. Machine d'étirage par gonflage (1) pour le moulage par gonflage de récipients à partir de préformes (P) dans au moins un poste de gonflage (4), qui comporte au moins un moule de gonflage (26) définissant une cavité de moulage, une buse de gonflage (8) et une barre d'étirage (15) qui peut être réglée par un servomoteur électrique (16) pendant une opération d'étirage, la machine d'étirage-gonflage (1) présentant au moins une unité de commande électronique programmable (20, 40) pour la commande de la vitesse et/ou de la force et/ou du déplacement du réglage de la barre d'étirage par l'intermédiaire du servomoteur (16), **caractérisé en ce que** dans l'unité de contrôle (20, 40) par le biais d'une section d'entrée (18, 18a, 18b) par des signaux et/ou des valeurs de courant pour le servomoteur (16), une réduction fixe ou variable de la force transmise par le servomoteur (15) à la barre d'étirage (15) dans une phase finale ou à la fin d'une opération d'étirage par rapport à une force maximale jusqu'à une force résiduelle réduite contrôlée et un temps d'attente fixe ou variable pour la réduction de la force après un contact entre le fond de la préforme (B) et le fond de l'empreinte du moule (FB) sont programmés.
